# EUROPEAN PATENT SPECIFICATION

(11) **EP 2 272 921 B1**
(45) Date of publication and mention of the grant of the patent: **04.09.2013**
(21) Application number: 10182367.2
(22) Date of filing: 24.02.2005
(51) Int. Cl.: C09C 3/06, C09C 1/36, C09C 1/42, C09C 1/02, C08K 9/02, C08K 5/00, C08K 9/04

(54) **Oxo-degradability inducing substance**
Zersetzung induzierende Verbindung
Composé d'induction de décomposition

(30) Priority: 24.02.2005 EP 05101393
(43) Date of publication of application: 12.01.2011
(62) Divisional of application: 05101393.6
(73) Proprietor: A. SCHULMAN PLASTICS, 2880 Bornem (BE)
(72) Inventor: Daponte, Tony, 2070 Zwijndrecht (BE); Janssens, Marcel, 9200 Dendermonde (BE)
(74) Representative: Caers, Raphael Frans Ivo

(56) References cited:
- EP-A1- 0 628 592
- EP-A1- 0 924 094
- EP-A2- 0 365 400

## Description

The present invention relates to a substance, a method of producing the same, a masterbatch containing said substance, a composition comprising said substance as such or in form of the masterbatch, an article obtainable from any of those compositions, as well as the use of such articles.

For quite some time polyolefins like polyethylene and polypropylene or copolymers thereof are used for the production of all kinds of plastic products and packagings, often in the form of films, like shopping bags or agricultural films. Depending on the method of production and/or the copolymer component used the resulting polyolefin products may exhibit different properties. High density polyethylene (HDPE), low density polyethylene (LDPE), linear low density polyethylene (LLDPE), metallocene catalyzed LLDPE (mLLDPE) and corresponding copolymers thereof are well known in the polymer industry as appropriate materials for forming plastic articles and in particular films.

As these plastic articles represent artificial products, there are many efforts to take into account environmental considerations when trying to improve the resins used for forming films or plastic articles. Those efforts refer to a production process of the polyolefin films and articles which is facilitated and less energy consuming and as well as to the degradation or recycling of the films and articles after use. However, in a lot of western countries there still exists a problem in case those films or other articles made of polyolefins are littered in the landscape and, thereby, are not prone to degradation or recycling. This represents an environmental as well as an aesthetical problem.

It is already well-known in industry that specific compounds like uncoated anatase titanium dioxide are able to degrade and mineralize all types of polyethylene films containing this compound upon exposure of these films to UV light and to composting temperatures of around 60°C.

It is an object of the present invention to find a way to provide polyolefin based films or articles which show improved oxo-degradable properties in comparison with the ones of the state of the art and which optionally even enable the thermal and photo degradation speed to be easily regulated.

The above problem is solved by providing a substance comprising at least one base material which is coated with one or more transition metal compounds being independently seleted from the group consisting of cadmium, cerium, chromium, cobalt, copper, iron, manganese, nickel and zinc. The inventors found out that it is not necessary to incorporate compounds having themselves oxo-degradability inducing properties into a polyolefin from which oxo-degradable articles or films shall be produced, but such properties may also be achieved by incorporating therein any commonly known pigment or filler or a mixture thereof as a base material which is coated with the above mentioned transition metal compounds.

Moreover, the inventors found out that using those coated base materials instead of the conventional anatase titanium dioxide which is used in the state of the art to produce polyolefin films results in polyolefin articles and in particular in polyolefin films with an improved oxo-degradation performance. The oxo-degradation performance may be determined based on a measurement of the reduction of the residual tensile elongation of said articles or films after exposure to UV light or when aged at composting temperatures of 60°C.

Although it is preferred to use a single base material it is also possible to utilize either a mixture of two or more pigments, a mixture of two or more fillers or a mixture of one or more pigments and one or more fillers.

The pigment forming the base material may be an anorganic pigment, an organic pigment or a mixture thereof. It is preferred to use a synthetic pigment as this allows to have an influence on the particle size and the purity of the pigment. However, it is also possible to utilize a natural pigment.

Suitable anorganic pigments can be selected from the group comprising titanium dioxide, zinc oxide, zinc sulphate, iron oxides, lithopone, antimony oxides, lead oxides, cobalt blue, iron blue, ultramarines, manganese violet, chromium oxides and mixtures thereof. Although it is not necessary to use pigments which themselves exhibit oxo-degradable properties such pigments are preferred. It is especially preferred to use a titanium dioxide pigment as a base material.

The kind of anorganic pigment which is appropriate in the present invention is not particularly limited. However, it may be advantageous to select such pigments which have a lower toxicity or are environmentally more friendly or such that do not exhibit properties like carcinogenic effects, depending on the intended appliance. However, although those properties may be not desired for a specific appliance they do not negatively influence the oxo-degradability of the resulting substance. Thus, compounds like for example zinc chromates, cadmium sulfide, cadmium orange, cadmium red or cadmium green may also be used although they are toxic and/or expected to be carcinogenic.

For the production of films it is particularly advantageous to use a titanium dioxide pigment and especially rutile titanium dioxide as the base material. Rutile titanium dioxide is especially preferred in comparison with anatase titanium dioxide for the production of a film because rutile titanium dioxide is about 20 % more opaque than anatase titanium dioxide.

In case the base material is a filler it is preferably selected from the group comprising calcium carbonate, calcium sulphate, barium sulphate, silicates, in particular talc, clay, china clay , siliceous earth or mica, aluminum hydroxide and mixtures thereof, and more preferred it is selected from china clay and calcium carbonate as will be explained by the examples.

The one or more transition metal compounds are independently selected from the group comprising oxides of cadmium, cerium, chromium, cobalt, copper, iron, manganese, nickel and zinc.

Although the number of transition metal compounds forming the coating on the base material generally is not limited, in a preferred embodiment the number ranges from 1 to 4 and, more preferred, represents 1 or 2. It is particularly preferred that the coating is formed of either iron oxide or manganese oxide alone or a combination of both.

In a particular advantageous embodiment a titanium dioxide pigment as the base material is coated with iron oxide, manganese oxide or a combination thereof.

The amount of the transition metal compound contained in the substance should be from 0,1 to 5,0 wt.%, preferably from 0,5 to 2,0 wt.%, most preferred 1,0 wt.%.

Although the way of producing the above described substances is not specifically limited, one preferred method of producing the substances according to the present invention comprises the calcination of at least one base material selected from the group comprising a pigment and a filler in the presence of one or more transition metal salts. Preferably, the pigments and fillers as mentioned above with respect to the substance are used for the production of the substance according to the invention.

In case a mixture of two or more pigments, a mixture of two or more fillers or a mixture of one or more pigments with one or more fillers are used as a base material each single base material can be coated separately with the one or more transition metal compounds and the coated materials can be mixed up afterwards to result in the substance according to the invention. However, it is also possible to already use a mixture of base materials (fillers and pigments) and calcine such a mixture in the presence of the transition metal salt(s). A further suitable way would be to calcine a mixture of several different fillers in the presence of the transition metal salt(s) separately from calcining different pigments in the presence of the transition metal salt(s) and mixing the coated fillers and the coated pigments afterwards.

A particularly suitable pigment used as the base material in this method represents titanium dioxide and in particular rutile titanium dioxide. It is preferred to use titanium dioxide which already is present in its rutile modification as the rutile titanium dioxide base material in the calcination process. However, it is also possible to obtain the rutile titanium dioxide, which is supposed to be coated, by calcining anatase titanium dioxide or a mixture of rutile and anatase titanium dioxide.

The calcination process of anatase titanium dioxide or of a mixture of rutile and anatase titanium dioxide which preferably results in the formation of pure rutile titanium dioxide may proceed in a separate pre-forming step which takes place before the main calcination process by which the coating of the transition metal compound is formed. However, it is also possible to apply only one calcination process in which at the same time anatase titanium dioxide, either alone or in combination with rutile titanium dioxide, is converted into rutile titanium dioxide and the coating of the transition metal compound is formed from the one or more transition metal salts on the rutile titanium dioxide.

The one or more transition metal salts are independently selected from the group comprising cadmium-, chromium-, cobalt-, copper-, iron-, manganese-, cerium-, nickel- and zinc salts. Preferably it represents iron salts, manganese salts or a combination thereof. Although the number of transition metal salts which are present during the calcination of the base material generally is not limited, in a preferred embodiment the number ranges from 1 to 4 and, more preferred, represents 1 or 2. It is particularly preferred that the calcination takes place in the presence of either an iron salt or a manganese salt alone or of a combination of both. In those cases the iron salt is preferably a Fe(III)-salt and the manganese salt is preferably a Mn(II)-salt.

Preferably, the above defined transition metal salts are based on a fatty acid. In case the calcination takes place in the presence of more than one transition metal salt the fatty acid in each of the used transition metal salts may be either the same or different. However, it is preferred that the fatty acid in each of the used transition metal salts is the same.

With respect to the fatty acids which may be employed to form the transition metal salt, these are not particularly limited. Yet, the inventors found out that the best results could be achieved using fatty acids which may be saturated or unsaturated and comprise from 8 to 22 carbon atoms. It is even more preferred that the fatty acid comprises from 16 to 18 carbon atoms and in, particular, if it represents stearic acid.

In case the calcination takes place in the presence of a mixture of two transition metal salts, it is advantageous to provide a molar metal ion ratio in the range of from 10/90 to 90/10, preferably of from 40/60 to 60/40 and most preferred of 50/50. In a particularly preferred embodiment a combination of an iron-salt, preferably a Fe(III)-salt, and a manganese salt, preferably a Mn(II)-salt, is used with a molar ion ratio of 50/50.

The calcination may be carried out at a temperature of from 500 to 1200°C, preferably of from 600 to 900°C and most preferred of 700°C. However, if the calcination step at the same time transforms the anatase titanium dioxide, optionally in combination with rutile titanium dioxide, in situ into the rutile titanium dioxide to be coated, and also forms the coating of the transition metal compound, the calcination temperature and the calcination time should be chosen such that the anatase titanium dioxide is completely converted into rutile titanium dioxide.

To support the formation of the coating of the transition metal compound on the base material it is advantageous to deposit the transition metal salt on the base material before the calcination is carried out. This may be achieved by dissolving or dispersing the base material and the one or more transition metal salts at first in an appropriate solvent or dispersant like an alcohol for example ethanol, isopropanol, 1-butanol, tert. butanol, with isopropanol being preferred. When having evaporated the solvent or dispersant the resulting mixture which comprises the base material coated with the transition metal salt(s) can then be calcined as described above.

The above described substance according to the invention may directly be mixed with one or more polyolefins to result in a substance composition from which polyolefin articles may be formed. In this case the total amount of the substance in the substance composition should be in the range of from 0,5 to 4 wt.%, preferably of from 1,5 to 3,5 wt.% and most preferred 3 wt.%. However, it is also possible to first produce a masterbatch comprising the above substance and at least one additional polyolefin.

Additional polyolefins suitable for producing such a substance composition or such a masterbach are exemplified by high density polyethylene (HDPE), low density polyethylene (LDPE), linear low density polyethylene (LLDPE), metallocene catalyzed LLDPE (mLLDPE), homopolymer polypropylene, block copolymer polypropylene, random copolymer polypropylene and mixtures thereof. LLDPE typically represents a copolymer of ethylene and a longchain olefin like butene or octene. The other comonomer-unit beside propylene in the propylene copolymers can be ethylene, butene and/or hexene.

In a preferred embodiment the masterbatch contains from 10 to 80 wt.%, preferably from 30 to 70 wt.% and more preferred 60 wt.% of the above described substance.

The masterbatch and as well the substance composition may also contain further ingredients typically used in the film and plastic article forming industry like antiblocking agents, antistatic agents, color pigments and antibacterial agents.

Compounding the one or more polyolefins with the substance powder in any compounding line as known in the state of the art, like a banburry internal mixer, a ZSK twinscrew or a BUSS-co-kneader from Coperion, Germany, represents one possible way to result in the masterbatch according to the present invention.

The above described masterbatch can be used to form a masterbatch composition which comprises at least one additional polyolefin besides said masterbatch. The masterbatch composition preferably contains the masterbatch in an amount of from 0,1 to 20 wt.%, preferably of from 3 to 10 wt.% and most preferred of 5 wt.%. Suitable additional polyolefins for forming such a masterbatch composition are the same which are mentioned above as being suitable to form the substance composition or the masterbatch. The polyolefin(s) mixed with the masterbatch may be the same as the one(s) used in the masterbatch or different ones. Preferably, the same polyolefin(s) like the one(s) of the masterbatch is(are) used. The masterbatch composition can also contain an additional amount of the substance of the present invention as such besides the amount already contained in the masterbatch.

The substance composition or the masterbatch composition may additionally comprise one or more degradation retardants. These are exemplified by commercially available hindered phenolic antioxidants like octadecyl-3,5-ditert.butyl-4-hydroxyhydrocinnamate (like Irganox 1076 provided by Ciba Specialty Chemicals Corp.), pentaerythrityl-tetrakis(3,5-di-tert-butyl-4-hydroxyphenyl-propionate) (like Irganox 1010 provided Ciba Specialty Chemicals Corp.) or R,R,R-α-tocopherol (vitamin E), or by hindered amine light stabilizers (HALS) like poly-(N-hydroxyethyl-2,2,6,6-tetramethyl-4-hydroxy-piperidylsuccinate (Tinuvin 622 provided by Ciba Specialty Chemicals Corp.), poly(N-1,1,3,3-tetramethylbutyl-NA,NB-di(2,2,6,6-tetramethylpiperidinyl)-NA,NB-melaminoditrimethylene (Chimassorb 944 provided by Ciba Specialty Chemicals Corp.) or N,N',N",N"'-tetrakis(4,6-bis(butyl-N-methyl-2,2,6,6-tetramethylpiperidine-4-yl)amino)triazine-2-yl)-4,7-diazadecane-1,10-diamine (Chimassorb 119 provided by Ciba Specialty Chemicals Corp.). It is also possible to apply a combination of two or more degradation retardants.

It is of particular advantage when using the substance composition or the masterbatch composition to produce polyolefin articles, that the thermal and photodegradation speed of the article can be regulated by adding such degradation retardants. The skilled person can easily determine which degradation retardant he can use to obtain the desired degradation speed of the article.

Preferably, the one or more degradation retardants are present in the above described substance composition or masterbatch composition according to the invention in an amount of from 0,01 to 1,0 wt.%, preferably of from 0,04 to 0,3 wt.%. It is also possible to incorporate the degradation retardants into the above described masterbatch itself.

The above mentioned masterbatch composition may also contain further additives typically used in the film or plastic article forming industry as specified above with respect to the masterbatch or to the substance composition.

The above described substance composition or masterbatch composition either may be preferably used to form a film thereof by conventional film forming methods known in the art. Such film forming methods are exemplified by blow molding, extrusion, calendaring or casting. The film thickness is not specifically limited but preferably it is in the range of from 10 to 400 µm, more preferred of from 40 to 150 µm.

Besides, it is also possible to use the substance composition or the masterbatch composition according to the present invention to produce other polyolefin articles like fibers and/or moldings. It has been found that those compositions as well are particularly advantageous for forming bottles and/or flower pots in addition to films. Of course other articles for which it may be desirable to be oxo-degradable after a predetermined time by exposure to UV light or to composting temperatures of about 60°C can be prepared using the substance composition or masterbatch composition according to the invention, too.

It is preferred to use the film obtained according to the invention as such or for the production of any kind of article comprising film-like components for which it might be desirable to be degraded after a predetermined time by exposure to UV light or to composting temperatures of about 60°C. Such films and articles are exemplified by shopping bags, garbage bags, body bags, agriculture mulch films, flower packaging films and all other kinds of packaging films.

In case the above described substance composition or masterbatch composition are used to produce a fiber, the obtained fibers may be utilized to form a yarn, a string, a fleece and/or a fabric thereof.

The present invention is further elucidated by the following example. In the following the percentages refer to wt.% unless otherwise indicated.

### Examples

The thermal and photodegradation speed of the single films obtained in the present example are compared on the basis of the reduction of the residual tensile elongation at predetermined exposure or ageing times. The residual tensile elongation was determined by first cutting 10 x 200 mm stripes out of the film, fixing them in the grips of an Instron Tensile Machine and performing a tensile test out of which the elongation at break can be calculated.

### Coating procedure and masterbatch production

### Example 1:

### Step 1:

360 grams of rutile titanium dioxide, 20 grams manganese(II)stearate and 20 grams iron(III)stearate were mixed together in a conventional mixing device and dissolved in 1 liter isopropanol. The mixing was continued for 30 minutes.

### Step 2:

The solvent was evaporated and the mixture was calcined in a microwave oven at 700°C for 10 minutes.

### Step 3:

A mixture containing 60 % of the powder according to step 2 and 40 % LDPE was then compounded into a masterbatch on a banburry internal mixer.

### Step 4:

5 % of the masterbatch obtained from step 3 were diluted with 95 % LDPE and the resulting mixture was transformed into a film with a thickness of 50 µm by cast extrusion.

### Example 2:

A film was produced in the same manner as in Example 1 with the exception that china clay named "Spesswhite" obtainable from the company IMERYS is coated with 5% manganese(II)stearate, based on china clay, only because it already contains sufficient Fe to induce photodegradation.

### Example 3:

A film was produced in the same manner as in Example 1 with the exception that marble calcium carbonate named "Carbital 110" obtainable from the company IMERYS is coated with 5% iron(III)stearate and 5% manganese(II)stearate, each based on marble calcium carbonate.

### Example 4:

A film was produced in the same manner as in Example 1 with the exception that before cast extrusion of the LDPE/masterbatch mixture into a film 1000 ppm Irganox 1010 were added.

### Example 5:

A film was produced in the same manner as in Example 1 with the exception that before cast extrusion of the LDPE/masterbatch mixture into a film 1000 ppm Tinuvin 622 were added.

### Example 6:

A film was produced in the same manner as in Example 1 with the exception that before cast extrusion of the LDPE/masterbatch mixture into a film 2000 ppm Chimassorb 944 were added.

### Example 7:

A film was produced in the same manner as in Example 1 with the exception that before cast extrusion of the LDPE/masterbatch mixture into a film 500 ppm Vitamin E were added.

### Example 8:

A film was produced in the same manner as in Example 2 with the exception that before cast extrusion of the LDPE/masterbatch mixture into a film 1000 ppm Irganox 1010 were added.

### Example 9:

A film was produced in the same manner as in Example 3 with the exception that before cast extrusion of the LDPE/masterbatch mixture into a film 1000 ppm Tinuvin 622 were added.

### Production of comparative films

### Comparative Example 1:

A mixture containing 60 % of conventional, untreated rutile titanium dioxide and 40 % LDPE was compounded into a masterbatch on a banburry internal mixer. 5 % of the resulting masterbatch were further diluted with 95 % LDPE and the resulting mixture was transformed into a film with a thickness of 50 µm by cast extrusion.

### Comparative Example 2:

A mixture containing 60 % conventional, untreated anatase titanium dioxide and 40 % LDPE was compounded into a masterbatch on a banburry internal mixer. 5 % of the resulting masterbatch were further diluted with 95 % LDPE and transformed into a film with a thickness of 50 µm by cast extrusion.

### Comparative Example 3:

A mixture containing 60 % untreated Spesswhite china clay and 40 % LDPE was compounded into a masterbatch on a banburry internal mixer. 5 % of this masterbatch were further diluted with 95 % LDPE and transformed into a 50 µm film by cast extrusion.

### Comparative Example 4:

A mixture containing 60 % untreated Carbital 110 marble calcium carbonate and 40 % LDPE was compounded into a masterbatch on a banburry internal mixer. 5 % of this masterbatch were further diluted with 95 % LDPE and transformed into a 50 µm film by cast extrusion.

### Oxo-degradabilily of the produced films

Each of the films having the same size produced according to examples 1 to 5 and comparative examples 1 and 2 was divided into 2 parts of identical size. One of those parts was exposed to UV light with a wavelength of 290 - 400 nm in a Sairem UV Exposure Cabinet for a total of 600 hours. The residual tensile elongation of the single films was determined according to the method specified above at the time levels indicated in Table 1 and related to the starting value. The values obtained for the percentage residual tensile elongation in comparison with the starting value are also shown in Table 1.

**Table 1**

| **Hours exposure in Sairem** | **Residual Tensile Elongation (%)** | | | | | | | | | | | | |
|---|---|---|---|---|---|---|---|---|---|---|---|---|---|
| | **CE1** | **CE2** | **CE3** | **CE4** | **E1** | **E2** | **E3** | **E4** | **E5** | **E6** | **E7** | **E8** | **E9** |
| **0** | 100 | 100 | 100 | 100 | 100 | 100 | 100 | 100 | 100 | 100 | 100 | 100 | 100 |
| **50** | 100 | 100 | 100 | 100 | 55 | 32 | 35 | 80 | 100 | 100 | 85 | 45 | 100 |
| **100** | 100 | 30 | 40 | 100 | 4 | 6 | 8 | 40 | 70 | 95 | 50 | 18 | 80 |
| **150** | 100 | 10 | 25 | 100 | 1 | 1 | 2 | 15 | 50 | 68 | 20 | 4 | 62 |
| **200** | 100 | 3 | 12 | 95 | 0 | 0 | 1 | 3 | 25 | 43 | 5 | 1 | 36 |
| **250** | 90 | 0 | 3 | 80 | 0 | 0 | 0 | 1 | 3 | 12 | 2 | 0 | 25 |
| **300** | 45 | 0 | 1 | 25 | 0 | 0 | 0 | 0 | 0 | 6 | 0 | 0 | 6 |
| **350** | 12 | 0 | 0 | 8 | 0 | 0 | 0 | 0 | 0 | 1 | 0 | 0 | 1 |
| **400** | 5 | 0 | 0 | 1 | 0 | 0 | 0 | 0 | 0 | 0 | 0 | 0 | 0 |
| **450** | 2 | 0 | 0 | 0 | 0 | 0 | 0 | 0 | 0 | 0 | 0 | 0 | 0 |
| **500** | 0 | 0 | 0 | 0 | 0 | 0 | 0 | 0 | 0 | 0 | 0 | 0 | 0 |

The second part of the films was placed into an oven for 70 days at a temperature of 60°C. The residual tensile elongation of the single films was determined according to the method specified above at the time levels indicated in Table 2 and related to the starting value. The values obtained for the percentage residual tensile elongation in comparison with the starting value are also shown in Table 2.

**Table 2**

| **Days ageing in oven (60°C)** | **Residual Tensile Elongation (%)** | | | | | | | | | | | | |
|---|---|---|---|---|---|---|---|---|---|---|---|---|---|
| | **CE1** | **CE2** | **CE3** | **CE4** | **E1** | **E2** | **E3** | **E4** | **E5** | **E6** | **E7** | **E8** | **E9** |
| **0** | 100 | 100 | 100 | 100 | 100 | 100 | 100 | 100 | 100 | 100 | 100 | 100 | 100 |
| **10** | 100 | 100 | 100 | 100 | 100 | 100 | 100 | 80 | 100 | 100 | 100 | 100 | 100 |
| **20** | 100 | 100 | 100 | 100 | 80 | 90 | 95 | 40 | 100 | 95 | 100 | 100 | 100 |
| **30** | 100 | 100 | 90 | 100 | 35 | 25 | 32 | 15 | 90 | 68 | 80 | 75 | 62 |
| **40** | 100 | 90 | 80 | 100 | 5 | 0 | 1 | 10 | 45 | 43 | 45 | 30 | 30 |
| **50** | 100 | 50 | 65 | 100 | 0 | 0 | 0 | 1 | 35 | 12 | 22 | 12 | 5 |
| **60** | 90 | 10 | 15 | 95 | 0 | 0 | 0 | 0 | 10 | 6 | 15 | 3 | 0 |
| **70** | 80 | 0 | 0 | 80 | 0 | 0 | 0 | 0 | 0 | 1 | 10 | 0 | 0 |

As can be seen from the examples shown in Tables 1 and 2 the coated rutile titanium dioxide according to the present invention is acting as a powerful oxo-degradant pigment and achieves an increased thermal and photodegradation speed of films containing those pigments in comparison with films containing conventional untreated rutile titanium dioxide or anatase titanium dioxide. Moreover, by adding degradation retardants it is possible to regulate the thermal and photodegradation speed as is desired with respect to the intended application.

## Claims

1. Masterbatch comprising (1) a substance comprising at least one base material selected from a group comprising a pigment and a filler, wherein the base material is coated with one or more transition metal compounds, the one or more transition metal compounds being independently selected from the group consisting of oxides of cadmium, cerium, chromium, cobalt, copper, iron, manganese, nickel and zinc, and (2) at least one polyolefin with which the substance is mixed.

2. Masterbatch according to claim 1, **characterized in that** the polyolefin is selected from the group comprising high density polyethylene (HDPE), low density polyethylene (LDPE), linear low density polyethylene (LLDPE), metallocene catalyzed LLDPE (mLLDPE), homopolymer polypropylene, block copolymer polypropylene, random copolymer polypropylene or mixtures thereof.

3. Masterbatch according to claims 1 or 2 **characterized in that** the masterbatch contains from 10 to 80 wt.% of the substance, preferably from 30 to 70 wt.%, more preferred 60 wt.%.

4. Composition comprising (1) a substance comprising at least one base material selected from a group comprising a pigment and a filler, wherein the base material is coated with one or more transition metal compounds, the one or more transition metal compounds being independently selected from the group consisting of oxides of cadmium, cerium, chromium, cobalt, copper, iron, manganese, nickel and zinc, and (2) at least one additional polyolefin with which the substance is mixed.

5. Composition according to claim 4 **characterized in that** it contains the substance in an amount of from 0.5 to 4 wt.%, preferably of from 1.5 to 3.5 wt.% and most preferred 3 wt.%.

6. Composition comprising the masterbatch according to any one of claims 1 to 3 and at least one additional polyolefin.

7. Composition according to claim 6 **characterized in that** it contains the masterbatch in an amount of from 0,1 to 20 wt.%, preferably of from 3 to 10 wt.% and most preferred of 5 wt.%.

8. Composition according to any of claims 4 to 7 **characterized in that** the additional polyolefin is selected from the group comprising high density polyethylene (HDPE), low density polyethylene (LDPE), linear low density polyethylene (LLDPE), metallocene catalyzed LLDPE (mLLDPE), homopolymer polypropylene, block copolymer polypropylene, random copolymer polypropylene or mixtures thereof.

9. Composition according to any of claims 4 to 8 **characterized in that** the additional polyolefin is identical with the polyolefin of the masterbatch.

10. Composition according to any of claims 4 to 9 **characterized in that** the composition additionally contains at least one degradation retardant.

11. Composition according to claim 10 **characterized in that** the degradation retardant is a hindered phenolic antioxidant and/or a hindered amine light stabilizer.

12. Composition according to claims 10 or 11 **characterized in that** the degradation retardant is contained in an amount of from 0.01 to 1.0 wt.%, preferably of from 0.04 to 0.3 wt.%.

13. Article obtainable from the composition according to claims 4 to 12.

14. Article according to claim 13 **characterized in that** it is a film, a fibre and/or a moulding.

15. Article according to claim 14 **characterized in that** the moulding is a bottle and/or a flower pot.

16. Use of the film according to claim 14 to produce a shopping bag, a garbage bag, a body bag, an agriculture mulch film a flower packaging film and/or a packaging.

17. Use of the fibre according to claim 14 to produce a yarn, a cord, a string, a fleece and/or a fabric.

## Patentansprüche

1. Masterbatch, Folgendes umfassend: (1) eine Substanz, die mindestens ein Grundmaterial umfasst, das aus einer Gruppe ausgewählt ist, die ein Pigment und einen Füllstoff umfasst, wobei das Grundmaterial mit einer oder mehreren Übergangsmetallverbindungen beschichtet ist, wobei die eine oder die mehreren Übergangsmetallverbindungen unabhängig voneinander aus der Gruppe ausgewählt sind, die aus Oxiden von Cadmium, Cer, Chrom, Kobalt, Kupfer, Eisen, Mangan, Nickel und Zink besteht, und (2) mindestens eine Polyolefin, mit dem die Substanz gemischt ist.

2. Masterbatch nach Anspruch 1, **dadurch gekennzeichnet, dass** das Polyolefin aus der Gruppe ausgewählt ist, die Polyethylen mit hoher Dichte (HDPE), Polyethylen mit niedriger Dichte (LDPE), lineares Polyethylen mit niedriger Dichte (LLDPE), metallocen-katalysiertes LLDPE (mLLDPE), Polypropylen-Homopolymer, Polypropylen-Blockcopolymer, statistisches Polypropylen-Copolymer oder Mischungen daraus umfasst.

3. Masterbatch nach Anspruch 1 oder 2, **dadurch gekennzeichnet, dass** das Masterbatch 10 bis 80 Gew.-% der Substanz enthält, vorzugsweise 30 bis 70 Gew.-%, stärker bevorzugt 60 Gew.-%.

4. Zusammensetzung, Folgendes umfassend: (1) eine Substanz, die mindestens ein Grundmaterial umfasst, das aus einer Gruppe ausgewählt ist, die ein Pigment und einen Füllstoff umfasst, wobei das Grundmaterial mit einer oder mehreren Übergangsmetallverbindungen beschichtet ist, wobei die eine oder die mehreren Übergangsmetallverbindungen unabhängig voneinander aus der Gruppe ausgewählt sind, die aus Oxiden von Cadmium, Cer, Chrom, Kobalt, Kupfer, Eisen, Mangan, Nickel und Zink besteht, und (2) mindestens ein weiteres Polyolefin, mit dem die Substanz gemischt ist.

5. Zusammensetzung nach Anspruch 4, **dadurch gekennzeichnet, dass** sie die Substanz in einer Menge von 0,5 bis 4 Gew.-% enthält, vorzugsweise von 1,5 bis 3,5 Gew.-% und am stärksten bevorzugt von 3 Gew.-%.

6. Zusammensetzung, das Masterbatch nach einem der Ansprüche 1 bis 3 umfassend und mindestens ein zusätzliches Polyolefin.

7. Zusammensetzung nach Anspruch 6, **dadurch gekennzeichnet, dass** sie das Masterbatch in einer Menge von 0,1 bis 20 Gew.-% enthält, vorzugsweise von 3 bis 10 Gew.-% und am stärksten bevorzugt von 5 Gew.-%.

8. Zusammensetzung nach einem der Ansprüche 4 bis 7, **dadurch gekennzeichnet, dass** das weitere Polyolefin aus der Gruppe ausgewählt ist, die Polyethylen mit hoher Dichte (HDPE), Polyethylen mit niedriger Dichte (LDPE), lineares Polyethylen mit niedriger Dichte (LLDPE), metallocen-katalysiertes LLDPE (mLLDPE), Polypropylen-Homopolymer, Polypropylen-Blockcopolymer, statistisches Polypropylen-Copolymer oder Mischungen daraus umfasst.

9. Zusammensetzung nach einem der Ansprüche 4 bis 8, **dadurch gekennzeichnet, dass** das weitere Polyolefin mit dem Polyolefin des Masterbatch identisch ist.

10. Zusammensetzung nach einem der Ansprüche 4 bis 9, **dadurch gekennzeichnet, dass** die Zusammensetzung zusätzlich mindestens einen Zersetzungshemmer enthält.

11. Zusammensetzung nach Anspruch 10, **dadurch gekennzeichnet, dass** der Zersetzungshemmer ein Antioxidans aus sterisch gehindertem Phenol und/oder ein Lichtschutzmittel aus sterisch gehindertem Amin ist.

12. Zusammensetzung nach Anspruch 10 oder 11, **dadurch gekennzeichnet, dass** der Zersetzungshemmer in einer Menge von 0,01 bis 1,0 Gew.-% enthalten ist, vorzugsweise von 0,04 bis 0,3 Gew.-%.

13. Gegenstand, der aus der Zusammensetzung nach Anspruch 4 bis 12 erzielt werden kann.

14. Gegenstand nach Anspruch 13, **dadurch gekennzeichnet, dass** er eine Folie, eine Faser und/oder ein Formstück ist.

15. Gegenstand nach Anspruch 14, **dadurch gekennzeichnet, dass** das Formstück eine Flasche und/oder ein Blumentopf ist.

16. Verwendung der Folie nach Anspruch 14, um einen Einkaufsbeutel, ein Müllbeutel, ein Leichensack, eine landwirtschaftliche Mulchfolie, eine Blumenverpackungsfolie und/oder eine Verpackung zu erzeugen.

17. Verwendung der Faser nach Anspruch 14, um ein Garn, eine Schnur, einen Faden, ein Fleece und/oder eine Textilie zu erzeugen.

## Revendications

1. Mélange-maître comprenant (1) une substance consistant en au moins une matière de base sélectionnée dans un groupe comprenant un pigment et une matière de charge, dans lequel la matière de base est revêtue d'un ou plusieurs composés métal de transition, lesdits un ou plusieurs composés métal de transition étant sélectionnés indépendamment dans le groupe consistant en oxydes de cadmium, cérium, chromium, cobalt, cuivre, fer, manganèse, nickel et zinc, et (2) au moins une polyoléfine avec laquelle la substance est mélangée.

2. Mélange-maître selon la revendication 1, **caractérisé en ce que** la polyoléfine est sélectionnée dans le groupe comprenant le polyéthylène à haute densité (HDPE), le polyéthylène à basse densité (LDPE), le polyéthylène linéaire à basse densité (LLDPE), le LLDPE catalysé par métallocène (mLLDPE), le polypropylène homopolymère, le polypropylène copolymère séquencé, le polypropylène copolymère statistique ou des mélanges de ceux-ci.

3. Mélange-maître selon les revendications 1 ou 2, **caractérisé en ce que** le mélange-maître contient de 10 à 80 % en poids de la substance, de préférence de 30 à 70 % en poids, mieux encore 60 % en poids.

4. Composition comprenant (1) une substance consistant en une matière de base sélectionnée dans un groupe comprenant un pigment et une matière de charge, dans lequel la matière de base est revêtue d'un ou plusieurs composés métal de transition, lesdits un ou plusieurs composés métal de transition étant sélectionnés indépendamment dans le groupe consistant en oxydes de cadmium, cérium, chromium, cobalt, cuivre, fer, manganèse, nickel et zinc, et (2) au moins une polyoléfine additionnelle avec laquelle la substance est mélangée.

5. Composition selon la revendication 4, **caractérisée en ce qu'**elle contient la substance dans une quantité de 0,5 à 4 % en poids, de préférence de 1,5 à 3,5 % en poids et idéalement de 3 % en poids.

6. Composition comprenant le mélange-maître selon l'une quelconque des revendications 1 à 3 et au moins une polyoléfine additionnelle.

7. Composition selon la revendication 6, **caractérisée en ce qu'**elle contient le mélange-maître dans une quantité de 0,1 à 20 % en poids, de préférence de 3 à 10 % en poids et idéalement de 5 % en poids.

8. Composition selon l'une quelconque des revendications 4 à 7, **caractérisée en ce que** la polyoléfine additionnelle est sélectionnée dans le groupe comprenant le polyéthylène à haute densité (HDPE), le polyéthylène à basse densité (LDPE), le polyéthylène linéaire à basse densité (LLDPE), le LLDPE catalysé par métallocène (mLLDPE), le propylène homopolymère, le polypropylène copolymère séquencé, le polypropylène copolymère statistique ou des mélanges de ceux-ci.

9. Composition selon l'une quelconque des revendications 4 à 8, **caractérisée en ce que** la polyoléfine additionnelle est identique à la polyoléfine du mélange-maître.

10. Composition selon l'une quelconque des revendications 4 à 9, **caractérisée en ce que** la composition contient en plus au moins un retardateur de dégradation.

11. Composition selon la revendication 10, **caractérisée en ce que** le retardateur de dégradation est un antioxydant phénolique encombré et/ou un stabilisant à la lumière à amine encombrée.

12. Composition selon les revendications 10 ou 11, **caractérisée en ce que** le retardateur de dégradation est contenu dans une quantité de 0,01 à 1,0 % en poids, de préférence de 0,04 à 0,3 % en poids.

13. Article obtensible à partir de la composition selon les revendications 4 à 12.

14. Article selon la revendication 13, **caractérisé en ce qu'**il est un film, une fibre et / ou un moulage.

15. Article selon la revendication 14, **caractérisé en ce que** le moulage est une bouteille et / ou un pot à fleur.

16. Utilisation du film selon la revendication 14 pour produire un sac à provisions, un sac poubelle, une housse mortuaire, un film de paillage agricole, un film d'emballage de fleur et/ou un emballage.

17. Utilisation de la fibre selon la revendication 14 pour produire un fil, un cordon, une ficelle, un non-tissé et / ou un tissu.
